# EUROPEAN PATENT APPLICATION

(11) **EP 4 221 009 A1**
(43) Date of publication of application: **02.08.2023**
(21) Application number: 21881986.0
(22) Date of filing: 19.10.2021
(51) Int. Cl.: H04L 1/00

(54) **DATA FRAME CHECK METHOD, RECEIVING DEVICE, AND TRANSMITTING DEVICE**

(30) Priority: 23.10.2020 CN 202011150464
(71) Applicant: Huawei Technologies Co., Ltd., Shenzhen, Guangdong 518129 (CN)
(72) Inventor: SU, Wei, Shenzhen, Guangdong 518129 (CN); SUN, Liang, Shenzhen, Guangdong 518129 (CN)
(74) Representative: Thun, Clemens
(86) International application number: PCT/CN2021/124624
(87) International publication number: WO 2022/083570

(57) **Abstract**

Embodiments of the present invention disclose a data frame check method, a receiving device, and a sending device. In a scenario in which bandwidths are asymmetric, according to the method, it can be effectively ensured that the receiving device can successfully send, to the sending device, a check result indicating a bit error status. The method provided in embodiments of the present invention includes: The receiving device receives a first optical transport network data frame from the sending device. The receiving device performs bit interleaved parity-X BIP-X on the first optical transport network data frame to obtain a first check result. The receiving device obtains indication information based on the first check result and a first accumulated value, and sends a third optical transport network data frame to the sending device, where the third optical transport network data frame includes the indication information.

## Description

This application claims priority to Chinese Patent Application No. 202011150464.2, filed with the China National Intellectual Property Administration on October 23, 2020 and entitled "DATA FRAME CHECK METHOD, RECEIVING DEVICE, AND SENDING DEVICE", which is incorporated herein by reference in its entirety.

### TECHNICAL FIELD

This application relates to the field of communications technologies, and in particular, to a data frame check method, a receiving device and a sending device.

### BACKGROUND

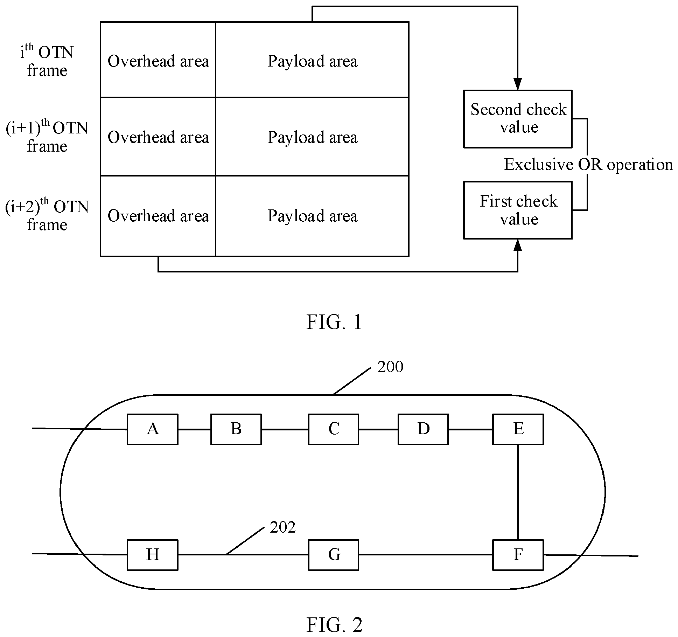

An optical transport network (optical transport network, OTN) is featured by a high bandwidth, a large capacity, a high reliability, a low delay, and the like. As shown in FIG. 1, a sending device performs bit interleaved parity-X (bit interleaved parity-X, BIP-X) on a payload of an i^{th} OTN frame, and sets a generated first check value in an overhead area of an (i+2)^{th} OTN frame. A receiving device also performs the BIP-X on the payload of the i^{th} OTN frame to obtain a second check value. Then, the receiving device extracts the first check value from the overhead area of the (i+2)^{th} OTN frame.

The receiving device performs an exclusive OR operation on the first check value and the second check value to generate a check result. If a value of the check result is 0, it indicates that there is no bit error in the payload of the i^{th} OTN frame. If the value of the check result is greater than or equal to 1 and less than or equal to X, it indicates that there is a bit error in the payload of the i^{th} OTN frame. The receiving device sends the check result to the sending device.

### SUMMARY

Embodiments of this application provide a data frame check method, a receiving device, and a sending device. In a scenario in which bandwidths are asymmetric, it can be effectively ensured that the receiving device can successfully send, to the sending device, a check result indicating a bit error status.

According to a first aspect, an embodiment of the present invention provides a data frame check method. The method includes: First, a receiving device receives a first optical transport network data frame from a sending device. Then, the receiving device performs bit interleaved parity-X BIP-X on the first optical transport network data frame to obtain a first check result, where the X is a positive integer greater than 1. Then, the receiving device obtains indication information based on the first check result and a first accumulated value. The first accumulated value indicates a bit error status of at least one second optical transport network data frame. The at least one second optical transport network data frame is adjacent to the first optical transport network data frame. A moment at which the receiving device receives the at least one second optical transport network data frame is earlier than a moment at which the receiving device receives the first optical transport network data frame. Finally, the receiving device sends a third optical transport network data frame to the sending device, where the third optical transport network data frame includes the indication information.

It may be learned that when a first bandwidth is asymmetric to a second bandwidth, the receiving device can successfully send the indication information to the sending device. The indication information indicates bit error statuses of one or more optical transport network data frames. The indication information indicates a bit error status, so that efficiency of indicating the bit error status to the sending device is effectively improved. This saves a bandwidth occupied for indicating the bit error status, and improves bandwidth utilization.

Based on the first aspect, in an optional implementation, after the receiving device sends the third optical transport network data frame to the sending device, the method further includes: The receiving device determines that the first accumulated value is 0.

It may be learned that, the receiving device clears the first accumulated value, so that the receiving device performs BIP-X on a subsequently received optical transport network data frame. In addition, when the first accumulated value is cleared, complexity of obtaining the indication information is reduced, and efficiency of obtaining the indication information is improved.

Based on the first aspect, in an optional implementation, if there is one second optical transport network data frame, the first accumulated value is a second check result of the second optical transport network data frame. Alternatively, if there is a plurality of second optical transport network data frames, the first accumulated value is a sum of second check results of the plurality of the second optical transport network data frames.

Based on the first aspect, in an optional implementation, that the receiving device obtains indication information based on the first check result and a first accumulated value includes: The receiving device sums up the first check result and the first accumulated value to obtain the indication information.

It may be learned that the indication information can indicate bit error statuses of a plurality of optical transport network data frames. This reduces bits occupied for sending the indication information, improves indication efficiency and bandwidth utilization.

Based on the first aspect, in an optional implementation, that the receiving device performs bit interleaved parity-X BIP-X on the first optical transport network data frame to obtain a first check result includes: The receiving device obtains a first check value from the sending device, where the first check value is a check value obtained by performing the BIP-X on the first optical transport network data frame; the receiving device performs the BIP-X on the first optical transport network data frame to obtain a second check value; and the receiving device compares the first check value with the second check value to obtain the first check result.

Based on the first aspect, in an optional implementation, the first check result is a quantity of first target bits. A location of the first target bit in the first check value is the same as a location of the first target bit in the second check value. A value of the first target bit in the first check value is different from a value of the first target bit in the second check value.

It may be learned that when the first check result is the quantity of the first target bits, a value of the first check result may not only indicate whether a bit error occurs in a payload of the first optical transport network data frame, but also indicate a quantity of bit errors occurring in the payload of the first optical transport network data frame. This improves accuracy of indicating a bit error to the sending device.

Based on the first aspect, in an optional implementation, a value of the first check result is a first value or a second value. The first value indicates that a quantity of second target bits is at least one. The second value indicates that the quantity of the second target bits is 0. A location of the second target bit in the first check value is the same as a location of the second target bit in the second check value. A value of the second target bit in the first check value is different from a value of the second target bit in the second check value.

It may be learned that, in this implementation, the first check result has only two values. This can effectively indicate whether a bit error occurs in the first optical transport network data frame. In this way, a quantity of bits occupied for sending the first check result is effectively reduced, a bandwidth occupied for sending the first check result is reduced, and bandwidth utilization is improved.

Based on the first aspect, in an optional implementation, after that the receiving device sends a third optical transport network data frame to the sending device, the method further includes: The receiving device sends a fourth optical transport network data frame to the sending device. The fourth optical transport network data frame includes a second accumulated value, and the second accumulated value is 0. The second accumulated value indicates that within a target time period, the receiving device receives no optical transport network data frame from the sending device. A timing start point of the target time period is a moment at which the receiving device sends the third optical transport network data frame. A timing end point of the target time period is a moment at which the receiving device sends the fourth optical transport network data frame.

It may be learned that, if no optical transport network data frame is received from the sending device between two optical transport network data frames continuously sent by the receiving device to the sending device, the receiving device can directly send the second accumulated value, that is, 0, to the sending device. The second accumulated value indicates a case in which the receiving device receives no optical transport network data frame in the target time period. In other words, there is no bit error.

Based on the first aspect, in an optional implementation, the first bandwidth is asymmetric to the second bandwidth. The receiving device receives the optical transport network data frame from the sending device by using the first bandwidth. The receiving device sends an optical transport network data frame to the sending device by using the second bandwidth.

According to a second aspect, an embodiment of the present invention provides a data frame check method. The method includes: A sending device sends a first optical transport network data frame to a receiving device. The sending device receives a third optical transport network data frame from the receiving device. The third optical transport network data frame includes indication information. The indication information indicates bit error statuses of the first optical transport network data frame and at least one second optical transport network data frame. The at least one second optical transport network data frame is adjacent to the first optical transport network data frame. A moment at which the sending device sends the at least one second optical transport network data frame is earlier than a moment at which the sending device sends the first optical transport network data frame.

For descriptions of beneficial effects described in this aspect, refer to the first aspect. Details are not described again.

Based on the second aspect, in an optional implementation, the method further includes: The sending device performs bit interleaved parity-X BIP-X on the first optical transport network data frame to obtain a first check value. The sending device sends a target optical transport network data frame to the receiving device. The target optical transport network data frame includes the first check value. The moment at which the sending device sends the first optical transport network data frame is earlier than a moment at which the sending device sends the target optical transport network data frame.

Based on the second aspect, in an optional implementation, after that the sending device receives a third optical transport network data frame from the receiving device, the method further includes: The sending device receives a fourth optical transport network data frame from the receiving device. The fourth optical transport network data frame includes a second accumulated value, and the second accumulated value is 0. The second accumulated value indicates that within a target time period, the receiving device receives no optical transport network data frame from the sending device. A timing start point of the target time period is a moment at which the receiving device sends the third optical transport network data frame. A timing end point of the target time period is a moment at which the receiving device sends the fourth optical transport network data frame.

According to a third aspect, an embodiment of the present invention provides a receiving device, including a processor, a memory, and an interface. The processor, the memory, and the interface are interconnected through a line. The interface is configured to perform steps related to receiving and sending an optical transport network data frame described in the first aspect. The processor invokes a program code in the memory, to perform processing-related steps described in the first aspect.

For descriptions of a specific execution process and beneficial effects described in this aspect, refer to the first aspect. Details are not described again.

According to a fourth aspect, an embodiment of the present invention provides a sending device, including a processor, a memory, and an interface. The processor, the memory, and the interface are interconnected through a line. The interface is configured to perform steps related to receiving and sending an optical transport network data frame described in the second aspect. The processor invokes a program code in the memory, to perform processing-related steps shown in the second aspect.

For descriptions of a specific execution process and beneficial effects described in this aspect, refer to the second aspect. Details are not described again.

According to a fifth aspect, an embodiment of this aspect provides a processing circuit, including an input interface circuit, a logic circuit, and an output interface circuit that are sequentially connected. The input interface circuit is configured to perform steps related to receiving an optical transport network data frame described in the first aspect or the second aspect. The output interface circuit is configured to perform steps related to sending an optical transport network data frame described in the first aspect or the second aspect. The logic circuit is configured to perform steps related to processing described in the first aspect or the second aspect.

According to a sixth aspect, an embodiment of this aspect provides an optical network. The optical network includes the receiving device shown in the third aspect and the sending device shown in the fourth aspect.

According to a seventh aspect, an embodiment of the present invention provides a computer-readable storage medium, including instructions. When the instructions are run on a computer, the computer is enabled to perform the method according to any implementation of the first aspect or the second aspect.

According to an eighth aspect, an embodiment of the present invention provides a computer program product including instructions. When the computer program product runs on a computer, the computer is enabled to perform the method according to any implementation of the first aspect or the second aspect.

### BRIEF DESCRIPTION OF DRAWINGS

FIG. 1 is an example flowchart of performing BIP-X as shown in an existing solution;
FIG. 2 is an example diagram of an OTN according to this application;
FIG. 3 is a flowchart of steps of a first embodiment of a data frame check method according to this application;
FIG. 4 is an example flowchart of a first embodiment of performing BIP-X according to this application;
FIG. 5 is an example diagram of a first transmission of an optical transport network data frame according to this application;
FIG. 6 is a flowchart of steps of a second embodiment of a data frame check method according to this application;
FIG. 7 is an example diagram of a second transmission of an optical transport network data frame according to this application;
FIG. 8 is an example diagram of a frame structure embodiment of an optical transport network data frame according to this application;
FIG. 9 is an example diagram of a structure embodiment of a processing circuit according to this application; and
FIG. 10 is an example diagram of a structure embodiment of an OTN device according to this application.

### DESCRIPTION OF EMBODIMENTS

It canbe understood that, in descriptions of this application, terms such as "first" and "second" are merely used for a purpose of distinguishing descriptions, and should not be construed as indicating or implying relative importance or a sequence.

To better understand a data frame check method provided in this application, the following first describes a structure of an optical network to which the method shown in this application is applied.

The optical network shown in this application is an OTN. One OTN is usually formed by connecting a plurality of OTN devices via optical fibers. The OTN may form different topology types such as a linear topology, a circular topology, and a mesh topology based on a specific requirement. An OTN 200 shown in FIG. 2 is formed by eight OTN devices, namely, OTN devices A to H. FIG. 2 is a schematic structural diagram of an OTN according to this application.

Every two OTN devices are connected via an optical fiber. For example, the OTN device H and the OTN device G are connected via an optical fiber 202. The OTN device has a service interface for sending an optical transport network data frame or receiving an optical transport network data frame.

Based on actual requirements, one OTN device may have different functions. Generally, OTN devices may be classified into optical-layer devices, electrical-layer devices, and optical-electrical hybrid devices. The optical-layer device is a device capable of processing an optical-layer signal. The device may be, for example, an optical amplifier (optical amplifier, OA) or an optical add-drop multiplexer (optical add-drop multiplexer, OADM). The OA may also be referred to as an optical line amplifier (optical line amplifier, OLA), and is mainly configured to amplify an optical signal, to support transmission over a longer distance while ensuring performance of the optical signal. The OADM is configured for space conversion for the optical signal so that the optical signal can be output from different output ports (which sometimes also referred to as directions). The electrical-layer device is a device capable of processing an electrical-layer signal, for example, a device capable of processing an OTN signal. The optical-electrical hybrid device is a device capable of processing an optical-layer signal and an electrical-layer signal.

Example descriptions are provided by using an example in which the data frame check method provided in this application is applied to the OTN device H and the OTN device G shown in FIG. 2. In the following descriptions, the OTN device H is used as a sending device, and the OTN device G is used as a receiving device. The OTN device H and the OTN device G exchange optical transport network data frames via the optical fiber 202.

First, an application scenario of the method provided in this application is described. The sending device sends an optical transport network data frame to the receiving device by using a first bandwidth. The receiving device sends the optical transport network data frame to the sending device by using a second bandwidth. The first bandwidth is asymmetric to the second bandwidth. For example, the first bandwidth is greater than the second bandwidth. For another example, the first bandwidth is less than the second bandwidth. According to the method shown in this application, when the first bandwidth is asymmetric to the second bandwidth, the receiving device can successfully send, to the sending device, a check result that indicates whether a bit error occurs in a payload of the optical transport network data frame.

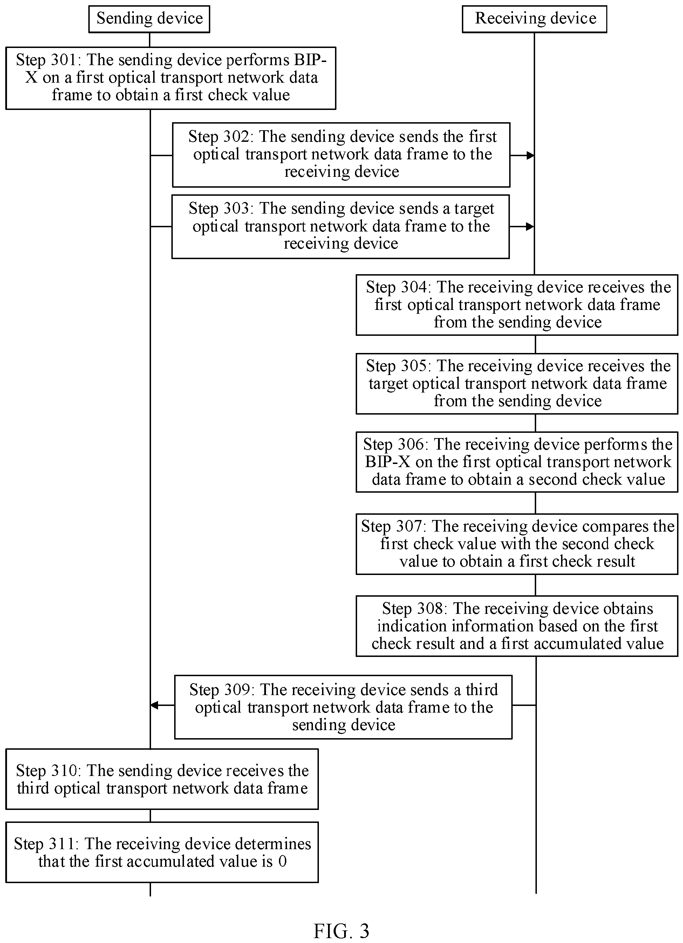

The following describes a first embodiment of the method provided in this application with reference to FIG. 3. FIG. 3 is a flowchart of steps of the first embodiment of the data frame check method according to this application.

Step 301: The sending device performs BIP-X on a first optical transport network data frame to obtain a first check value.

The following describes examples of several situations of the first optical transport network data frame shown in this embodiment.

### Situation 1

The first optical transport network data frame includes a plurality of subframes. The subframe shown in this embodiment may be an optical service unit (optical service unit, OSU) frame. A name of the subframe is not limited in this embodiment. For example, the subframe may also be referred to as a flexible optical service unit frame (OSUflex), a low rate frame, a low rate service frame, or an optical service data unit frame. A size of the subframe is not limited in this embodiment. For example, the size of the subframe shown in this embodiment is 192 bytes. The subframe includes an overhead area and a payload area. The subframe may also be referred to as a data frame. This is not limited in this application.

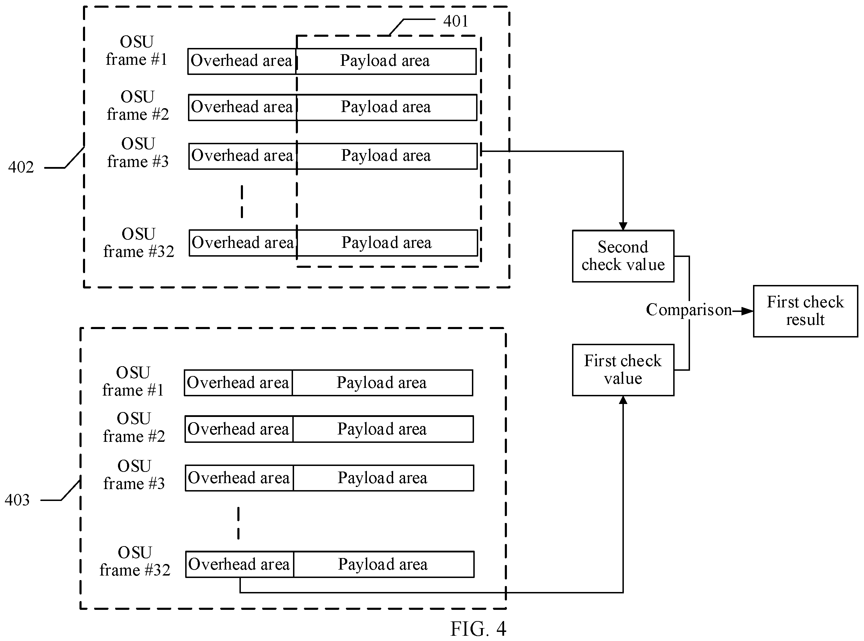

A quantity of subframes included in each first optical transport network data frame is not limited in this embodiment. For example, as shown in FIG. 4, one first optical transport network data frame includes 32 subframes. That is, one optical transport network data frame includes an OSU frame #1, and an OSU frame #2 to an OSU frame #32. The OSU frame #1 represents the first subframe sent to the receiving device in the 32 subframes included in the first optical transport network data frame. By analogy, the OSU frame #32 represents the last subframe sent to the receiving device in the 32 subframes included in the first optical transport network data frame.

### Situation 2

The first optical transport network data frame is an OSU frame.

This embodiment is described by using an example in which the first optical transport network data frame includes a plurality of subframes. As shown in FIG. 4, the sending device performs the BIP-X on a payload 401 of the plurality of subframes included in the first optical transport network data frame 402, to obtain the first check value. X is a quantity of bits included in the first check value obtained by performing the BIP-X on the payload 401, that is, the first check value includes X bits.

A value of X is not limited in this embodiment. For example, X is a positive integer greater than or equal to 1. This embodiment is described by using an example in which the value of X is 8. That is, the sending device performs BIP-8 on the payload 401 to obtain the first check value. The first check value includes 8 bits.

Step 302: The sending device sends the first optical transport network data frame to the receiving device.

Step 303: The sending device sends a target optical transport network data frame to the receiving device.

For descriptions of the target optical transport network data frame in this step, refer to the descriptions of the first optical transport network data frame in step 301. Details are not described again.

When the sending device has obtained the first check value of the first optical transport network data frame 402, the sending device sets the first check value in an overhead area of a target optical transport network data frame 403. For example, the sending device may set the first check value in an overhead area of one or more subframes included in the target optical transport network data frame 403.

In this embodiment, a first moment at which the sending device sends the first optical transport network data frame 402 is earlier than a second moment at which the sending device sends the target optical transport network data frame 403. Whether the sending device sends another optical transport network data frame between the first moment and the second moment is not limited in this embodiment. For example, the sending device may continuously send the first optical transport network data frame 402 and the target optical transport network data frame 403. For another example, the sending device sends one or more optical transport network data frames between the first moment and the second moment.

Step 304: The receiving device receives the first optical transport network data frame from the sending device.

For specific descriptions of the first optical transport network data frame, refer to step 301. Details are not described again.

Step 305: The receiving device receives the target optical transport network data frame from the sending device.

The receiving device may extract the first check value from the overhead area of the target optical transport network data frame.

Step 306: The receiving device performs the BIP-X on the first optical transport network data frame to obtain a second check value.

For descriptions of a process in which the receiving device performs the BIP-X on the first optical transport network data frame to obtain the second check value, refer to the descriptions of the process in which the sending device obtains the first check value in step 301. Details are not described again.

An execution sequence between step 305 and step 306 is not limited in this embodiment.

Step 307: The receiving device compares the first check value with the second check value to obtain a first check result.

The receiving device in this embodiment may obtain the first check result in the following optional manners.

### Manner 1

The first check result is a counted quantity of first target bits. A location of the first target bit in the first check value is the same as a location of the first target bit in the second check value. A value of the first target bit in the first check value is different from a value of the first target bit in the second check value.

Specifically, the receiving device performs an exclusive OR operation on the first check value and the second check value to collect statistics on the quantity of the first target bits. The exclusive OR operation means that the receiving device determines, in the first check value and the second check value, whether two bits located at a same location are the same. If the two bits are the same, a statistical value 0 is generated; if the two bits are different, a statistical value 1 is generated. The first check result is a sum of all statistical values output after the exclusive OR operation is performed.

It can be learned that after the exclusive OR operation is performed, if the quantity of the first target bits is 0, it indicates that there is no bit error in a payload area of the first optical transport network data frame. After the exclusive OR operation is performed, if the quantity of the first target bits is one or more, it indicates that there is a bit error in the payload area of the first optical transport network data frame.

For example, if eight bits included in the first check value are 01101100, and eight bits included in the second check value are 01101101, the receiving device performs the exclusive OR operation on the eight bits one by one. In the first check value and the second check value obtained by the receiving device, if bits at the first position are "0" and "0" respectively, the statistical value 0 is generated. By analogy, in the first check value and the second check value obtained by the receiving device, if bits at the eighth position are "0" and " 1" respectively, the statistical value 1 is generated. It can be learned that all statistical values generated by the receiving device are respectively 0 0 0 0 0 0 0 1. The eight statistical values are summed up to obtain the first check result, which is 1.

It can be learned that, in the foregoing manner, the first check result indicates a bit error status of the payload of the first optical transport network data frame. To be specific, a larger value of the first check result indicates a higher bit error rate of the payload of the first optical transport network data frame. A smaller value of the first check result indicates a lower bit error rate of the payload of the first optical transport network data frame

### Manner 2

A difference between this manner and the manner 1 lies in that, for different bit error statuses, first check results with different values are obtained in the manner 1. In other words, in the manner 1, a minimum value of a value range of the first check result is 0, and a maximum value of the value range is X. However, the first check result in this manner has only two values.

Specifically, the value of the first check result shown in this manner is a first value or a second value. The first value or the second value is not limited in this embodiment provided that the first value or the second value is less than X.

The first value indicates that a quantity of second target bits is at least one. The second value indicates that the quantity of the second target bits is 0. A location of the second target bit in the first check value is the same as a location of the second target bit in the second check value. A value of the second target bit in the first check value is different from a value of the second target bit in the second check value.

The receiving device performs the exclusive OR operation on the first check value and the second check value, to determine the first check result. Specifically, if the receiving device determines that in the eight bits separately included in the first check value and the second check value, the quantity of the second target bits is one or more, it is determined that the value of the first check result is the first value. For example, in this embodiment, the first value is 1.

If the quantity of the second target bits is 0, it indicates that values of bits that are located at a same location and that are included in the first check value and the second check value are the same. The receiving device determines that a value of a second check result is the second value. For example, in this embodiment, the second value is 0.

It can be learned that after the exclusive OR operation is performed, if the quantity of the second target bits is 0, it indicates that there is no bit error in a payload area of the first optical transport network data frame. After the exclusive OR operation is performed, if the quantity of the second target bits is one or more, it indicates that there is a bit error in the payload area of the first optical transport network data frame.

For example, if eight bits included in the first check value are 11101100, and eight bits included in the second check value are 01101101, it can be learned that the quantity of the second target bits is 2, and the receiving device determines that the first check result is 1. If eight bits included in the first check value are 11110000, and eight bits included in the second check value are also 11110000, it can be learned that the quantity of the second target bits is 0, and the receiving device determines that the first check result is 0.

In this manner, when the first check result can effectively indicate whether a bit error occurs in the first optical transport network data frame, a quantity of bits occupied for sending the first check result is effectively reduced, a bandwidth occupied for sending the first check result is reduced, and bandwidth utilization is effectively improved.

Step 308: The receiving device obtains indication information based on the first check result and a first accumulated value.

The following describes several situations about a value of the first accumulated value shown in this embodiment.

### Situation 1

If the receiving device has sent a check result of a second optical transport network data frame to the sending device, the first accumulated value is 0. The second optical transport network data frame is adjacent to the first optical transport network data frame. A moment at which the receiving device receives the second optical transport network data frame is earlier than a moment at which the receiving device receives the first optical transport network data frame.

### Situation 2

If a quantity of second optical transport network data frames is one, the first accumulated value is the second check result. The second check result is the check result of the second optical transport network data frame. For descriptions of the second check result, refer to the foregoing descriptions of the first check result. Details are not described again.

### Situation 3

If a quantity of second optical transport network data frames is more than one, the first accumulated value is a sum of a plurality of second check results.

If the receiving device has obtained the first accumulated value and the first check result, the receiving device sums up the first accumulated value and the first check result to obtain the indication information.

For better understanding, the following describes a specific process of obtaining the indication information with reference to a specific example.

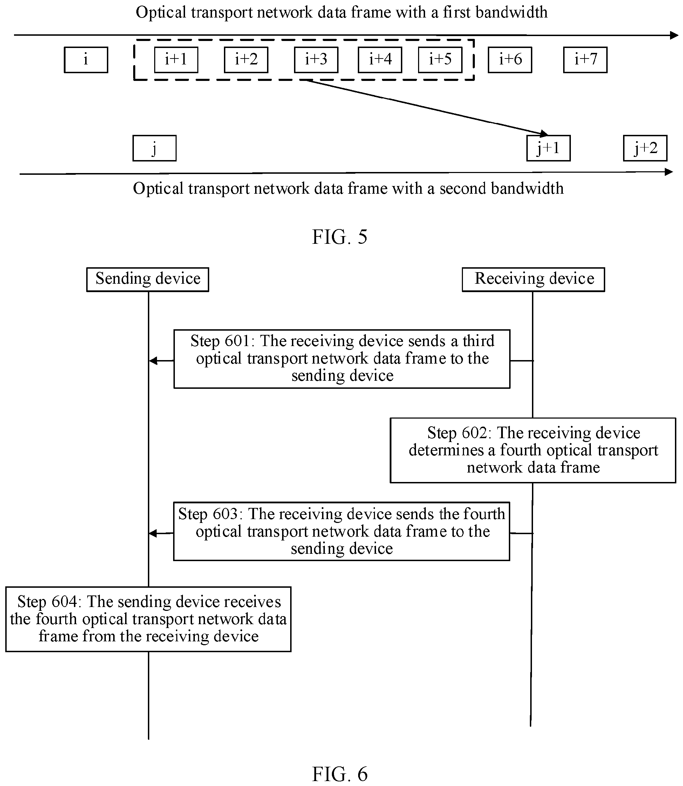

FIG. 5 shows an example in which the first bandwidth is greater than the second bandwidth. For descriptions of the first bandwidth and the second bandwidth, refer to the foregoing descriptions. Details are not described again. Optical transport network data frames i, and i+1 to i+7 are a plurality of optical transport network data frames continuously sent by the sending device to the receiving device. Optical transport network data frames j, j+1, and j+2 are a plurality of optical transport network data frames continuously sent by the receiving device to the sending device. In terms of a time dimension, the optical transport network data frames sent in two directions are aligned from left to right. For descriptions of each optical transport network data frame, refer to the foregoing descriptions of the first optical transport network data frame. Details are not described again.

For example, a check result of the optical transport network data frame i has been sent to the sending device by using the optical transport network data frame j. In this example, check results of the optical transport network data frames i+1 to i+7 are not sent to the sending device.

The receiving device in this embodiment preconfigures the first accumulated value. After the receiving device has sent the check result of the optical transport network data frame i to the sending device by using the optical transport network data frame j, the receiving device clears the first accumulated value. It can be learned that in this case, the first accumulated value is 0.

Then, the receiving device receives the optical transport network data frame i+1.

A check result of the optical transport network data frame i+1 obtained by the receiving device is N1. For a specific obtaining process, refer to the descriptions of obtaining the first check result in step 307. Details are not described again. That is, the receiving device performs the BIP-X on the optical transport network data frame i+1 to obtain the second check value. A first check value of the optical transport network data frame i+1 may be set in an optical transport network data frame i+2 by the sending device.

If the receiving device has an optical transport network data frame to be sent to the sending device, the receiving device sets, in the optical transport network data frame, indication information including N1. If the receiving device has no optical transport network data frame to be sent to the sending device, the receiving device determines that the first accumulated value = 0 + N1 = N1.

Then, the receiving device receives the optical transport network data frame i+2.

A check result of the optical transport network data frame i+2 obtained by the receiving device is N2. For a specific obtaining process, refer to the process of obtaining N1. In this case, the first accumulated value = N1 + N2 = N3.

If the receiving device has an optical transport network data frame to be sent to the sending device, the receiving device sets, in the optical transport network data frame, indication information including N3. If the receiving device has no optical transport network data frame to be sent to the sending device, the receiving device determines that the first accumulated value = N3.

By analogy, a check result of the optical transport network data frame i+3 obtained by the receiving device is N4. In this case, the first accumulated value = N3 + N4 = N5. A check result of the optical transport network data frame i+4 obtained by the receiving device is N6. In this case, the first accumulated value = N5 + N6 = N7. A check result of the optical transport network data frame i+5 obtained by the receiving device is N8. In this case, the first accumulated value = N7 + N8 = N9.

In this case, if the receiving device has an optical transport network data frame j+1 to be sent to the sending device, the receiving device sets, in the optical transport network data frame j+1, indication information including N9. It can be learned that the indication information shown in this example indicates bit error statuses of a first optical transport network data frame i+1 and second optical transport network data frames i+2 to i+5.

For example, if a value of the indication information is 0, it indicates that there is no bit error in a payload area of the first optical transport network data frame i+1 and payload areas of the second optical transport network data frames i+2 to i+5. If the value of the indication information is a non-zero value, it indicates that there are bit errors in the payload area of the first optical transport network data frame i+1 and the payload areas of the second optical transport network data frames i+2 to i+5.

The foregoing describes an example in which the first optical transport network data frame is a multiframe. In other words, the first optical transport network data frame includes a plurality of subframes, and the receiving device has received a complete first optical transport network data frame.

For example, the first optical transport network data frame includes 32 subframes (for example, an OSU frame #1, and an OSU frame #2 to an OSU frame #32). The receiving device has completely received the 32 subframes. In another example, if the receiving device needs to send a third optical transport network data frame, the receiving device only receives some subframes included in the first optical transport network data frame (for example, an OSU frame #1, and an OSU frame #2 to an OSU frame #20). However, the receiving device has not received the remaining subframes included in the first optical transport network data frame (for example, an OSU frame #21, and an OSU frame #22 to an OSU frame #32). In this case, the receiving device determines that a value of the first check result of the first optical transport network data frame is 0.

Optionally, this embodiment is described by using an example in which the indication information is a sum of the first check result and the first accumulated value. No limitation is imposed, provided that the indication information is related to the first check result and a second accumulated value. For example, the indication information may be a product or an average value of the first check result and the first accumulated value.

Step 309: The receiving device sends the third optical transport network data frame to the sending device.

In this embodiment, the receiving device sends the indication information to the sending device via the third optical transport network data frame that includes the indication information.

Still refer to FIG. 5. The receiving device has sent indication information of the optical transport network data frame i to the sending device by using the optical transport network data frame j. Since the first bandwidth is greater than the second bandwidth, the receiving device has received the optical transport network data frames i+1 to i+5 between the optical transport network data frames j and j+1 sent by the receiving device to the sending device. When the receiving device determines that a third optical transport network data frame j+1 needs to be sent to the sending device, the receiving device has successfully obtained indication information of the optical transport network data frames i+1 to i+5. The receiving device sets the indication information in an overhead area of the third optical transport network data frame j+1, and then sends the third optical transport network data frame j+1 to the sending device.

In this embodiment, the indication information is carried by using a backward error indication (backward error indication, BEI) overhead of the third optical transport network data frame. If the third optical transport network data frame includes a plurality of subframes, the indication information may be carried by using a BEI overhead of at least one subframe. In this embodiment, the indication information may alternatively be carried by using other overheads of the third optical transport network data frame. This is not specifically limited in this embodiment.

Step 310: The sending device receives the third optical transport network data frame.

The sending device extracts the indication information from the overhead area of the third optical transport network data frame. The sending device may determine a bit error status of the first optical transport network data frame and a bit error status of the second optical transport network data frame based on the indication information.

For example, the sending device may determine a link situation between the sending device and the receiving device based on the indication information. If interference to the link is more severe, for example, a value of the indication information is relatively large, the sending device may determine whether to switch the link based on the link situation.

Step 311: The receiving device determines that the first accumulated value is 0.

In this embodiment, the receiving device has sent, to the sending device via the third optical transport network data frame, the indication information that indicates the bit error statuses of the first optical transport network data frame and the second optical transport network data frame. The receiving device clears the first accumulated value, that is, in this case, the first accumulated value is 0. In this way, the receiving device generates new indication information based on a subsequently received optical transport network data frame.

For example, if the receiving device has sent, via the third optical transport network data frame j+1, indication information that indicates bit error statuses of the optical transport network data frames i+1 to i+5, the receiving device clears the first accumulated value, to re-obtain indication information that indicates the optical transport network data frame i.

An execution sequence between step 311 and step 309 is not limited in this embodiment.

An initial value of the first accumulated value shown in this embodiment is 0. After obtaining the indication information of the optical transport network data frame, the initial value of the first accumulated value is cleared. In other examples, the initial value may alternatively be another value, provided that both the sending device and the receiving device have agreed in advance on a same initial value.

It is to be noted that step 311 shown in this embodiment is an optional step. That is, the receiving device may not perform clearing. The sending device may correspondingly subtract a used value of a check result from the received indication information sent by the receiving device, to obtain a bit error status of a currently to-be-processed data frame.

According to the method shown in this embodiment, when the first bandwidth is asymmetric to the second bandwidth, the receiving device can successfully send the indication information to the sending device. The indication information indicates bit error statuses of one or more optical transport network data frames. The indication information indicates a bit error status, so that efficiency of indicating the bit error status to the sending device is effectively improved. This saves a bandwidth occupied for indicating the bit error status, and improves bandwidth utilization.

It can be understood that this embodiment of this application may also be used in a case in which bandwidths are symmetric to each other. Specifically, a manner shown in FIG. 5 may be used, so that an overhead of occupying a data frame can be reduced, and bandwidth utilization can be improved.

In the embodiment shown in FIG. 3, between two optical transport network data frames continuously sent by the receiving device to the sending device, the receiving device receives one or more optical transport network data frames from the sending device. A process of how to send the indication information to the receiving device based on this case is described above. With reference to FIG. 6, the following describes an example in which between two optical transport network data frames continuously sent by the receiving device to the sending device, the receiving device does not receive the optical transport network data frame from the sending device. A process of how to send the indication information to the receiving device based on this case is described below.

Step 601: The receiving device sends a third optical transport network data frame to the sending device.

The third optical transport network data frame shown in this embodiment is any optical transport network data frame sent by the receiving device to the sending device. For example, the third optical transport network data frame shown in this embodiment may be shown as the third optical transport network data frame shown in FIG. 3. For details, refer to step 309 shown in FIG. 3. Details are not described again.

Step 602: The receiving device determines a fourth optical transport network data frame.

The fourth optical transport network data frame shown in this embodiment is an optical transport network data frame to be sent by the receiving device to the sending device. It can be learned that a moment at which the receiving device sends the fourth optical transport network data frame is later than a moment at which the receiving device sends the third optical transport network data frame.

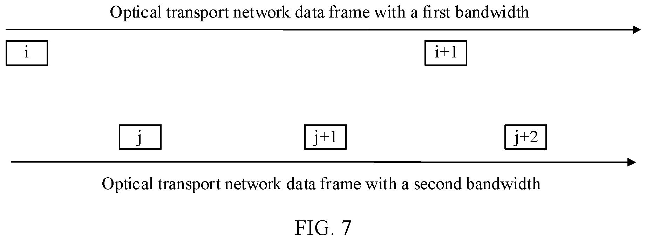

For example, as shown in FIG. 7a first bandwidth is less than a second bandwidth, the third optical transport network data frame is j, and the fourth optical transport network data frame is j+1.

The receiving device in this embodiment sets, in an overhead area of the fourth optical transport network data frame, indication information including a second accumulated value.

It can be learned from the embodiment shown in FIG. 3 that an initial value of the first accumulated value is 0. As shown in step 308, the first accumulated value and a check result are summed up to generate the indication information. A specific process is shown in step 308. Details are not described again.

An initial value of the second accumulated value shown in this embodiment may also be 0. If an optical transport network data frame from the sending device is received between the third optical transport network data frame and the fourth optical transport network data frame that are sent by the receiving device, a check result of the optical transport network data frame may be accumulated to the second accumulated value.

However, for example, in this embodiment, the first bandwidth is less than the second bandwidth. In this embodiment, within a target time period, the receiving device does not receive the optical transport network data frame from the sending device. A timing start point of the target time period is the moment at which the receiving device sends the third optical transport network data frame. A timing end point of the target time period is the moment at which the receiving device sends the fourth optical transport network data frame.

Still refer to FIG. 7. It can be learned that the receiving device does not receive any optical transport network data frame from the sending device between a third optical transport network data frame j and a fourth optical transport network data frame j+1 that are sent by the receiving device. It can be learned that, in the target time period, the check result is not accumulated to the second accumulated value, that is, the second accumulated value is always 0.

When sending the fourth optical transport network data frame, the receiving device directly sets the second accumulated value, that is, 0, into indication information, and sends the indication information to the sending device by using the overhead area of the fourth optical transport network data frame.

Step 603: The receiving device sends the fourth optical transport network data frame to the sending device.

Step 604: The sending device receives the fourth optical transport network data frame from the receiving device.

The sending device extracts the second accumulated value from the overhead area of the fourth optical transport network data frame. The sending device may determine, based on the second accumulated value, that is, 0, that the receiving device has not received the optical transport network data frame in the target time period. It can be learned that the sending device may determine that a link between the sending device and the receiving device does not need to be switched. The sending device may continue to detect a bit error status based on an accumulated value included in the subsequently received optical transport network data frame.

Based on the method shown in this embodiment, if no optical transport network data frame is received from the sending device between two optical transport network data frames continuously sent by the receiving device to the sending device, the receiving device can directly send the second accumulated value, that is, 0, to the sending device. The second accumulated value indicates a case in which the receiving device does not receive an optical transport network data frame in the target time period. In other words, there is no bit error.

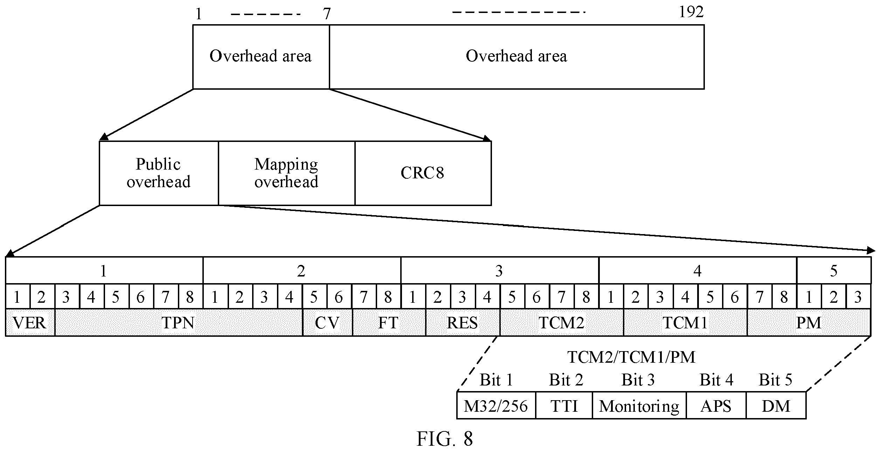

The foregoing embodiment describes an example in which an optical transport network data frame is an OSU frame. For better understanding, with reference to FIG. 8, the following describes a frame structure of an OSU frame provided in this application.

As shown in FIG. 8, the OSU frame shown in this embodiment is 192 bytes, including an overhead area of 7 bytes and a payload area of 185 bytes. The overhead area includes a public overhead, a mapping overhead, and cyclic redundancy check-8 bits (cyclic redundancy check-8 bits, CRC8).

The public overhead may include one or more of the following overheads: a version (version, VER), a tributary port number (tributary port number, TPN), a connectivity verification (Connectivity Verification, CV), a frame type (frame type, FT), tandem connection monitoring (tandem connection monitoring, TCM), or path monitoring (path monitoring, PM). A size of each overhead is not limited in this embodiment. For example, VER is 2 bits. The TPN is 10 bits.

The TCM and the PM specifically include an M32 multiframe indication message (M32), a trail trace identifier (trail trace identifier, TTI), a monitoring message (Monitoring), automatic protection switching (automatic protection switching, APS), and delay measurement (delay measurement, DM). A size of each overhead is not limited in this embodiment. For example, one bit is allocated in each OSU frame, which is specifically indicated by using M32.

When an optical transport network data frame includes 32 OSU frames, optional content of monitoring overheads of the 32 OSU frames may be: monitoring overheads of an OSU frame #1 to an OSU frame #8, which are used for carrying a check value. With reference to the example shown in FIG. 5, the monitoring overheads of the OSU frame #1 to the OSU frame #8 included in the optical transport network data frame i+1 are configured to carry a check value of the optical transport network data frame i+2.

Monitoring overheads of an OSU frame #9 to an OSU frame #24 are BEIs. The BEI is configured to carry indication information. A monitoring overhead of an OSU frame #25 is a backward defect indication (BDI). Monitoring overheads of an OSU frame #26 to an OSU frame #32 are RES.

Alternatively, a monitoring overhead of an OSU frame #9 is the BDI. Monitoring overheads of an OSU frame #10 to an OSU frame #25 are BEIs. The BEI is used to carry the indication information. Monitoring overheads of an OSU frame #26 to an OSU frame #32 are RES.

It is to be noted that descriptions of a specific frame structure of an optical transport network data frame in this embodiment are an optional example, and no limitation is imposed, provided that the sending device can send a check value to the receiving device by using the optical transport network data frame, and the receiving device can send the indication information to the sending device.

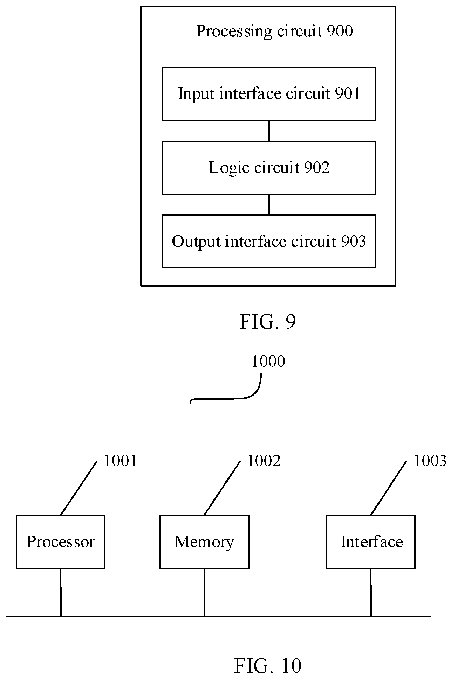

The following describes a structure of a processing circuit that is configured to perform any embodiment in FIG. 3 or FIG. 6 and that is provided in this application. As shown in FIG. 9, the processing circuit 900 shown in this embodiment includes an input interface circuit 901, a logic circuit 902, and an output interface circuit 903 that are sequentially connected.

When a sending device includes the processing circuit 900, the logic circuit 902 performs steps related to processing performed on the sending device side shown in either of the embodiments of FIG. 3 and FIG. 6. The input interface circuit 901 is configured to perform steps related to receiving an optical transport network data frame shown in either of the embodiments of FIG. 3 and FIG. 6. The output interface circuit 903 is configured to perform steps related to sending an optical transport network data frame shown in either of the embodiments of FIG. 3 and FIG. 6.

When a receiving device includes the processing circuit 900, the logic circuit 902 performs steps related to processing performed on the receiving device side shown in either of the embodiments of FIG. 3 and FIG. 6. The input interface circuit 901 is configured to perform steps related to receiving an optical transport network data frame shown in either of the embodiments of FIG. 3 and FIG. 6. The output interface circuit 903 is configured to perform steps related to sending an optical transport network data frame shown in either of the embodiments of FIG. 3 and FIG. 6.

Optionally, the logic circuit 902 shown in this embodiment may also be referred to as a processor. The input interface circuit 901 and the output interface circuit 903 may alternatively be implemented by using one interface circuit.

The processing apparatus including the processing circuit 900 shown in this embodiment may be one or more chips, or one or more integrated circuits. For example, the processing apparatus may be one or more field-programmable gate arrays (field-programmable gate arrays, FPGAs), an application-specific integrated circuit (application-specific integrated circuit, ASIC), a system on chip (system on chip, SoC), a central processor unit (central processor unit, CPU), a digital signal processor (digital signal processor, DSP), a micro controller unit (micro controller unit, MCU), a programmable logic device (programmable logic device, PLD), or another integrated chip, or any combination of the foregoing chips or processors.

The following describes a specific structure of an OTN device provided in this application with reference to FIG. 10. As shown in FIG. 10, the OTN device 1000 includes a processor 1001, a memory 1002, and an interface 1003. The processor 1001, the memory 1002, and the interface 1003 are interconnected through a line. The memory 1002 is configured to store program instructions and data.

The memory 1002 shown in this embodiment stores the processing-related steps shown in either of the embodiments shown in FIG. 3 and FIG. 6 that are performed by the processor 1001 in steps shown in FIG. 3 and FIG. 6. The interface 1003 is configured to perform steps related to receiving and sending of an optical transport network data frame in either of the embodiments of FIG. 3 and FIG. 6.

For example, in FIG. 3, if the OTN device 1000 is used as a sending device, the processor 1001 is configured to perform step 301 and step 311, and the interface 1003 is configured to perform step 302, step 303 and step 310. If the OTN device 1000 is used as a receiving device, the interface 1003 is configured to perform step 304, step 305 and step 309, and the processor 1001 is configured to perform step 306, step 307 and step 308.

For another example, in FIG. 6, if the OTN device 1000 is used as a sending device, the interface 1003 is configured to perform step 604. If the OTN device 1000 is used as a receiving device, the interface 1003 is configured to perform step 601 and step 603, and the processor 1001 is configured to perform step 602.

Based on the foregoing embodiments, an embodiment of this application further provides a computer-readable storage medium. The storage medium stores a software program, and when the software program is read and executed by one or more processors, the method provided in any one or more of the foregoing embodiments can be implemented.

It is clear that a person skilled in the art can make various modifications and variations to embodiments of this application without departing from the scope of embodiments of this application. This application is intended to cover these modifications and variations of embodiments of this application provided that they fall within the scope of protection defined by the following claims of this application and their equivalent technologies.

## Claims

1. A data frame check method, wherein the method comprises:
receiving, by a receiving device, a first optical transport network data frame from a sending device;
performing, by the receiving device, bit interleaved parity-X BIP-X on the first optical transport network data frame to obtain a first check result, wherein X is a positive integer greater than 1;
obtaining, by the receiving device, indication information based on the first check result and a first accumulated value, wherein the first accumulated value indicates a bit error status of at least one second optical transport network data frame, the at least one second optical transport network data frame is adjacent to the first optical transport network data frame, and a moment at which the receiving device receives the at least one second optical transport network data frame is earlier than a moment at which the receiving device receives the first optical transport network data frame; and
sending, by the receiving device, a third optical transport network data frame to the sending device, wherein the third optical transport network data frame comprises the indication information.

2. The method according to claim 1, wherein after the sending, by the receiving device, a third optical transport network data frame to the sending device, the method further comprises:
determining, by the receiving device, that the first accumulated value is 0.

3. The method according to claim 1 or 2, wherein if there is one second optical transport network data frame, the first accumulated value is a second check result of the second optical transport network data frame; or
if there is a plurality of second optical transport network data frames, the first accumulated value is a sum of second check results of the plurality of the second optical transport network data frames.

4. The method according to any one of claims 1 to 3, wherein the obtaining, by the receiving device, indication information based on the first check result and a first accumulated value comprises:
summing up, by the receiving device, the first check result and the first accumulated value, to obtain the indication information.

5. The method according to any one of claims 1 to 4, wherein the performing, by the receiving device, bit interleaved parity-X BIP-X on the first optical transport network data frame to obtain a first check result comprises:
obtaining, by the receiving device, a first check value from the sending device, wherein the first check value is a check value obtained by performing the BIP-X on the first optical transport network data frame;
performing, by the receiving device, the BIP-X on the first optical transport network data frame to obtain a second check value; and
comparing, by the receiving device, the first check value with the second check value to obtain the first check result.

6. The method according to claim 5, wherein the first check result is a quantity of first target bits, a location of the first target bit in the first check value is the same as a location of the first target bit in the second check value, and a value of the first target bit in the first check value is different from a value of the first target bit in the second check value.

7. The method according to claim 5, wherein a value of the first check result is a first value or a second value, the first value indicates that a quantity of second target bits is at least one, the second value indicates that the quantity of the second target bits is 0, a location of the second target bit in the first check value is the same as a location of the second target bit in the second check value, and a value of the second target bit in the first check value is different from a value of the second target bit in the second check value.

8. The method according to any one of claims 1 to 7, wherein after the sending, by the receiving device, a third optical transport network data frame to the sending device, the method further comprises:
sending, by the receiving device, a fourth optical transport network data frame to the sending device, wherein the fourth optical transport network data frame comprises a second accumulated value, and the second accumulated value is 0; and the second accumulated value indicates that within a target time period, the receiving device receives no optical transport network data frame from the sending device, a timing start point of the target time period is a moment at which the receiving device sends the third optical transport network data frame, and a timing end point of the target time period is a moment at which the receiving device sends the fourth optical transport network data frame.

9. The method according to any one of claims 1 to 8, wherein a first bandwidth is asymmetric to a second bandwidth, the receiving device receives the optical transport network data frame from the sending device by using the first bandwidth, and the receiving device sends an optical transport network data frame to the sending device by using the second bandwidth.

10. A data frame check method, wherein the method comprises:
sending, by a sending device, a first optical transport network data frame to a receiving device; and
receiving, by the sending device, a third optical transport network data frame from the receiving device, wherein the third optical transport network data frame comprises indication information, the indication information indicates bit error statuses of the first optical transport network data frame and at least one second optical transport network data frame, the at least one second optical transport network data frame is adjacent to the first optical transport network data frame, and a moment at which the sending device sends the at least one second optical transport network data frame is earlier than a moment at which the sending device sends the first optical transport network data frame.

11. The method according to claim 10, wherein the method further comprises:
performing, by the sending device, bit interleaved parity-X BIP-X on the first optical transport network data frame to obtain a first check value; and
sending, by the sending device, a target optical transport network data frame to the receiving device, wherein the target optical transport network data frame comprises the first check value, and the moment at which the sending device sends the first optical transport network data frame is earlier than a moment at which the sending device sends the target optical transport network data frame.

12. The method according to claim 10 or 11, wherein after the receiving, by the sending device, a third optical transport network data frame from the receiving device, the method further comprises:
receiving, by the sending device, a fourth optical transport network data frame from the receiving device, wherein the fourth optical transport network data frame comprises a second accumulated value, and the second accumulated value is 0; and the second accumulated value indicates that within a target time period, the receiving device receives no optical transport network data frame from the sending device, a timing start point of the target time period is a moment at which the receiving device sends the third optical transport network data frame, and a timing end point of the target time period is a moment at which the receiving device sends the fourth optical transport network data frame.

13. A receiving device, comprising:
a processor and an interface, wherein the processor and the interface are interconnected through a line, and the interface is configured to receive a first optical transport network data frame from a sending device; and
the processor is configured to perform the following steps:
performing bit interleaved parity-X BIP-X on the first optical transport network data frame to obtain a first check result, wherein X is a positive integer greater than 1; and
obtaining indication information based on the first check result and a first accumulated value, wherein the first accumulated value indicates a bit error status of at least one second optical transport network data frame, the at least one second optical transport network data frame is adjacent to the first optical transport network data frame, and a moment at which the receiving device receives the at least one second optical transport network data frame is earlier than a moment at which the receiving device receives the first optical transport network data frame; and
the interface is further configured to send a third optical transport network data frame to the sending device, wherein the third optical transport network data frame comprises the indication information.

14. The receiving device according to claim 13, wherein the processor is further configured to determine that the first accumulated value is 0.

15. The receiving device according to claim 13 or 14, wherein if there is one second optical transport network data frame, the processor is specifically configured to determine that the first accumulated value is a second check result of the second optical transport network data frame; or if there is a plurality of second optical transport network data frames, the processor is specifically configured to determine that the first accumulated value is a sum of second check results of the plurality of the second optical transport network data frames.

16. The receiving device according to any one of claims 13 to 15, wherein the processor is specifically configured to sum up the first check result and the first accumulated value, to obtain the indication information.

17. The receiving device according to any one of claims 13 to 16, wherein
the interface is specifically configured to obtain a first check value from the sending device, and the first check value is a check value obtained by performing the BIP-X on the first optical transport network data frame; and
the processor is specifically configured to:
perform the BIP-X on the first optical transport network data frame to obtain a second check value; and
compare the first check value with the second check value to obtain the first check result.

18. The receiving device according to any one of claims 13 to 17, wherein
the interface is further configured to send a fourth optical transport network data frame to the sending device, wherein the fourth optical transport network data frame comprises a second accumulated value, and the second accumulated value is 0; and the second accumulated value indicates that within a target time period, the receiving device receives no optical transport network data frame from the sending device, a timing start point of the target time period is a moment at which the receiving device sends the third optical transport network data frame, and a timing end point of the target time period is a moment at which the receiving device sends the fourth optical transport network data frame.

19. A sending device, wherein the device comprises:
a processor and an interface, wherein the processor and the interface are interconnected through a line, and the interface is configured to:
send a first optical transport network data frame to a receiving device; and
receive a third optical transport network data frame from the receiving device, wherein the third optical transport network data frame comprises indication information, the indication information indicates bit error statuses of the first optical transport network data frame and at least one second optical transport network data frame, the at least one second optical transport network data frame is adjacent to the first optical transport network data frame, and a moment at which the sending device sends the at least one second optical transport network data frame is earlier than a moment at which the sending device sends the first optical transport network data frame.

20. The sending device according to claim 19, wherein the processor is configured to perform the following steps:
performing bit interleaved parity-X BIP-X on the first optical transport network data frame to obtain a first check value; and
the interface is further configured to send a target optical transport network data frame to the receiving device, wherein the target optical transport network data frame comprises the first check value, and the moment at which the sending device sends the first optical transport network data frame is earlier than a moment at which the sending device sends the target optical transport network data frame.

21. The sending device according to claim 19 or 20, wherein the interface is further configured to receive a fourth optical transport network data frame from the receiving device, wherein the fourth optical transport network data frame comprises a second accumulated value, and the second accumulated value is 0; and the second accumulated value indicates that within a target time period, the receiving device receives no optical transport network data frame from the sending device, a timing start point of the target time period is a moment at which the receiving device sends the third optical transport network data frame, and a timing end point of the target time period is a moment at which the receiving device sends the fourth optical transport network data frame.
